(19) Europäisches Patentamt
European Patent Office
Office européen des brevets

(11) EP 4 749 975 A1

## (12) EUROPEAN PATENT APPLICATION

(43) Date of publication:
27.05.2026 Bulletin 2026/22

(21) Application number: 24306950.7

(22) Date of filing: 22.11.2024

(51) International Patent Classification (IPC):
H04L 9/00 (2022.01)

(52) Cooperative Patent Classification (CPC):
H04L 9/008; G06N 5/01; G06N 20/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Orange
92130 Issy-les-Moulineaux (FR)

(72) Inventors:
• PLESA, Mihail
020334 BUCHAREST (RO)
• IRIMIA, Sebastian
020334 BUCHAREST (RO)
• Simona, DAVID
020334 BUCHAREST (RO)

(74) Representative: Plasseraud IP
104 Rue de Richelieu
CS92104
75080 Paris Cedex 02 (FR)

## (54) METHOD FOR PROCESSING AN ECRYPTED DIGITAL CONTENT WITH A DECISION TREE

(57) It is disclosed a method for processing a digital content with a decision tree, comprising:
-transmitting a ciphertext to a server;
-obtaining, from the server, a processed ciphertext function of an encryption of a difference between a third vector equal to a multiplication of the plaintext and a first matrix, and a first vector;
-decrypting the processed ciphertext;
-setting elements of the processed plaintext selectively to 1 or 0;
-encrypting the processed plaintext;
-transmitting the resulting second ciphertext to the server;
-obtaining, from the server, a second processed ciphertext function of an encryption of a difference between a fourth vector equal to a multiplication of the processed plaintext and a second matrix, and a second vector;
-decrypting the second processed ciphertext;
-setting elements of the resulting second plaintext selectively to 0 or 1 ;
-determining an outcome of the decision tree based on the second plaintext.

FIG. 3

EP 4 749 975 A1

**Description**

The present disclosure generally belongs to the technical field of encryption and decryption of digital content.

More precisely, the present disclosure relates to a method for processing an ecrypted digital content with a decision tree.

**Background of the disclosure**

When seeking to process digital content, entities such as companies and individuals (here referred to as "client device") often rely on third-parties (here referred to as "processing device"), mainly because a client device does not possess the required computational ressources and/or the know-how required for the respective processing.

The processing of digital content involves for example image classification, image feature classification or threat classification in Internet traffic.

Decision trees are at the core of many processing data structures. A processing device may have a decision tree exposed to a client device through a service.

However, the client device may not want to reveal the digital content to be processed to the processing device. Furthermore, the processing device may not want to reveal the properties of the decision tree.

There are many current solutions for processing a confidential digital content with a decision tree.

These solutions are based on either fully homomorphic encryption protocols or additive homomorphic encryption protocols in conjunction with privacy-preserving comparison protocols. These solutions evaluate the decision tree node by node.

The known solutions either require many back-and-forth transmissions of encrypted data between the client device and the processing device, and are inefficient due to complex encryption protocols that are required. Thus, these solutions are slow in terms of effective runtime and generate large ciphertexts, which leads to an inflation of the data.

Accordingly, a need exists for a method that responds to at least some of the problems mentioned above, and that allows efficiently processing a confidential digital content with a decision tree, and that requires less back-and-forth transmissions of data between the client device and the processing device.

**Summary**

The present disclosure remedies the shortcomings of prior art.

It is disclosed a method for processing a digital content with a decision tree comprising a plurality of nodes and a plurality of leaves, wherein a splitting attribute and a splitting threshold are assigned to each node, the decision tree being defined by a first matrix defining a relation between the nodes and the splitting attributes, a second matrix defining a position of a respective leaf of the decision tree with respect to a respective node of the decision tree, a first vector comprising the splitting threshold of each node, and a second vector describing, for each leaf of the decision tree, a number of successful tests on splitting attributes of respective nodes required to reach a respective leaf.

The method may comprise:

- obtaining, by a client device, a plaintext representative of a digital content to be processed, the plaintext being in the form of a vector;
- encrypting, by the client device, the plaintext to obtain a ciphertext;
- transmitting, by the client device, the ciphertext to a processing device;
- obtaining, by the client device, a processed ciphertext from the processing device, the processed ciphertext being function of an encryption of a difference between a third vector and the first vector, wherein an encryption of the third vector is determined based on an encryption of a multiplication of the plaintext and the first matrix;
- decrypting, by the client device, the processed ciphertext, to obtain a processed plaintext;
- setting, by the client device, elements of the processed plaintext with a positive sign or being equal to 0 to a first value and elements of the processed plaintext with a negative sign to a second value different from the first value;
- encrypting, by the client device, the processed plaintext, to obtain a second ciphertext;
- transmitting, by the client device, the second ciphertext to the processing device;
- obtaining, by the client device, a second processed ciphertext from the processing device, the second processed ciphertext being function of an encryption of a difference between a fourth vector and the second vector, wherein an encryption of the fourth vector is determined based on an encryption of a multiplication of the processed plaintext and the second matrix;
- decrypting, by the client device, the second processed ciphertext, to obtain a second plaintext;
- setting, by the client device, elements of the second plaintext either to a third value or to a fourth value, as a function of a value of a respective element of the second plaintext;

- determining, by the client device, an outcome of the decision tree based on the second plaintext, the outcome being representative of a leaf of the decision tree.

The client device may be any kind of device, such as a computer, capable of exchanging data with a processing device and capable of processing data and of encrypting and decrypting data. The client device may have a specific arrangement and/or specific programming in order to implement the different steps of the method.

The processing device may be any kind of device, such as a computer, capable of exchanging data with a client device and capable of processing data. The processing device may have a specific arrangement and/or a specific programming in order to implement the different steps of the method.

The expression *"obtaining, by a client device, a plaintext representative of a digital content to be processed"* may mean that the plaintext is determined by the client device, or that the plaintext is sent by another device to the client device and received by the client device.

The digital content may be any kind of data to be processed. For example, the digital content may be a scalar, a vector or a matrix. However, the digital content may even be a higher-dimensional tensor.

For example, the digital content may be an image. The method may then be applied in order to identify a pattern in the image.

The plaintext may be a vector, wherein each element of the vector may characterize the digital content.

The decision tree may be fully characterized by a vector-matrix description as provided by Nakandalam, S., Saur, K., Yu, G., Karanasos, K., Curino, C., Weimer, M. and Interlandi, M., "Taming model serving complexity, performance and cost: A compilation to tensor computations approach, propose a description of the properties of a decision tree using matrices and vector", 2020.

The decision tree may be a binary decision tree, i.e. two possible paths may emerge from each node.

Each node may represent a test on a splitting attribute (i.e. a test whether a respective condition is true or false?). When evaluating a digital content with the decision tree, an element of the respective ciphertext may be compared to a splitting threshold of a respective node for least some of the nodes of the decision tree.

Therefore, for a binary decision tree, each test on a splitting attribute may have two possible outcomes that may be characterized as "true" or "false". The "true" path emerging from the node may be chosen if the test on the splitting attribute is true (e.g. 5>1), and the "false" path emerging from the node may be chosen if the test on the splitting attribute is false (e.g. 3<7).

Each leaf represents one out of several possible outcomes of the decision tree.

In the first matrix, each column may be representative of a given node and each row may be representative of a given element of the ciphertext.

In the second matrix, each column may be representative of a given leaf and each row may be representative of a given node.

Each element of the second vector may describe for a respective leaf how often the "true" path needs to be taken in order to reach a respective leaf when starting at the top of the decision tree.

The third vector may be equal to a multiplication of the plaintext and the first matrix.

The fourth vector may be equal to a multiplication of the processed plaintext and the second matrix.

The encryption and decryption as performed by the method may be homomorphic with respect to addition and multiplication, i.e. multiplicative or additive operations performed on a ciphertext will also be present in the respective plaintext after decryption.

The proposed method is innovative in that an encryption protocol is applied to the vector-matrix description of the decision tree.

The proposed method allows efficiently processing a confidential digital content with a decision tree, which is achieved by using a vector-matrix description of the decision tree, wherein all data sent by the client device to the processing device are encrypted.

Thus, the respective ciphertexts may be processed and an outcome of the decision tree may be determined by the client device, without the processing device learning any relevant information about the data provided by the client device or the processed data that the client device obtains from the processing device.

The processing device has no relevant information about the plaintext, the processed plaintext, the second processed plaintext, the second plaintext or the outcome determined by the client device.

Only few back-and-forth transmissions between the client device and the processing device are required. The method is very efficient and fast in effective runtime, and may easily be implemented even if the client device has limited computational resources.

In an embodiment, a permutation may be applied to the processed ciphertext by the processing device and a permutation inverse to the permutation applied to the processed ciphertext may be applied to the second ciphertext by the processing device.

The permutation provides additional confidentiality for the processing device.

Indeed, by permuting elements of the processed ciphertext before transmitting the processed ciphertext to the client device, it is more difficult for the client device to gather any information about the structure and the content of the first matrix and the first vector and hence about the structure of the decision tree.

In an embodiment, a permutation may be applied to the second processed ciphertext by the processing device. The method may comprise:

- having set elements of the second plaintext either to a third value or to a fourth value: encrypting, by the client device, the second plaintext;
- transmitting, by the client device, the encrypted second plaintext to the processing device;
- obtaining, by the client device, an encrypted outcome of the decision tree from the processing device, the encrypted outcome of the decision tree being representative of a leaf of the decision tree determined by the processing device by applying a permutation inverse to the permutation applied to the second processed ciphertext to the encrypted second plaintext, and by determining an encryption of a multiplication between the encrypted second plaintext and a leaf vector, wherein a respective element of the leaf vector is representative of a respective leaf of the decision tree;
- decrypting, by the client device, the encrypted outcome of the decision tree to obtain the outcome of the decision tree.

The permutation provides additional confidentiality for the processing device.

Indeed, by permuting elements of the second processed ciphertext before transmitting the second processed ciphertext to the client device, it is more difficult for the client device to gather any information about the structure and the content of the second matrix and the second vector and hence about the structure of the decision tree.

The encryption of a multiplication between the encrypted second plaintext and the leaf vector may be determined according to the following relation:

$$Enc(\sum_i a_i b_i) = \prod_i Enc(a_i)^{b_i}$$

wherein $a_i$ are elements of the encrypted second plaintext and $b_i$ are elements of the leaf vector.

In an embodiment, encryption and decryption may be based on a protocol being homomorphic with respect to addition and multiplication.

A homomorphic encryption is a form of encryption that allows computations (here aditions and multiplications) to be performed on a respective ciphertext without having to decrypt the ciphertext therefore. The resulting computations are directly translated into the plaintext. This means that encrypting a respective plaintext, applying a given transformation to the resulting ciphertext and then decrypting the processed ciphertext will lead to the same result as if the transformation had been directly applied to the plaintext.

In an embodiment, the protocol may be a Paillier encryption protocol.

A specific advantage of the Paillier encryption protocol is that it is homomorphic with respect to addition and multiplication.

However, any encryption protocol being homomorphic with respect to addition and multiplication may be used.

In an embodiment, the encryption of a multiplication of the plaintext and the first matrix, and/or the encryption of a multiplication of the processed plaintext and the second matrix may be defined as:

$$Enc(\sum_i a_i b_{ij}) = \prod_i Enc(a_i)^{b_{ij}}$$

wherein $a_i$ are elements of the plaintext/the processed plaintext and $b_{ij}$ are elements of the first matrix/the second matrix.

This formula may be specific to Paillier encryption. However, similar relations allowing to determine the encrypted product between vectors and/or matrices may be used for other encryption protocols being homomorphic with respect to addition and multiplication.

Starting from an encrypted vector $Enc(m_i)$ and a matrix $p_{ij}$ that is not encrypted, it is possible to determined the encrypted product of the vector $m_i$ and the matrix $p_{ij}$.

Thus, the processing device can perform multiplicative operations on the ciphertext provided by the client device without learning any relevant information about the underlying plaintext.

In an embodiment, the encryption of a difference between the third vector and the first vector and/or an encryption of a difference between the fourth vector and the second vector may be defined as:

$$Enc(r_i \times (c_i - d_i)) = (Enc(c_i) \times Enc(d_i)^{-1})^{r_i}$$

wherein $c_i$ are elements of the third vector/the fourth vector, $d_i$ are elements of the first vector/the second vector, and $r_i$ are numbers having a same sign.

In an embodiment, $r_i$ may be positive numbers.

In an embodiment, $r_i$ may be random numbers.

In an embodiment, the encryption of a difference between the third vector and the first vector and/or an encryption of a difference between the fourth vector and the second vector may be defined as:

$$Enc(c_i - d_i) = Enc(c_i) \times Enc(d_i)^{-1}$$

This formular may be specific to Paillier encryption. However, similar relations allowing to determine the encrypted difference between vectors and/or matrices may be used for other encryption protocols being homomorphic with respect to addition and multiplication.

Thus, starting from an encrypted vector $Enc(q_i)$ and an encrypted vector $Enc(p_i)$, it is possible to determine the encrypted difference of the vector $q_i$ and the vector $p_i$.

Thus, the processing device can perform subtractive operations on the ciphertext provided by the client device without learning any relevant information about the underlying plaintext.

As mentioned, the client device may only be interested in the sign of each element of the difference $q_i - p_i$. Thus, the processing device may multiply each element of the difference $q_i - p_i$ with an individual factor $r_i$. Like this, the client device cannot learn any relevant information about the elements of the difference $q_i - p_i$ except for the sign which is preserved if only factors $r_i$ having a same sign are used.

In an embodiment, setting, by the client device, elements of the processed plaintext with a positive sign or being equal to 0 to a first value and with a negative sign to a second value may comprise: setting elements of the processed plaintext to 1 if a difference between respective elements the third vector and the first vector is positive or equal to 0 and to 0 if a difference between respective elements of the third vector and the first vector is negative.

In an embodiment, setting, by the client device, elements of the second plaintext either to a third value or to a fourth value, as a function of a value of a respective element, may comprise: setting elements with a value different from 0 to 0 and elements with a value equal to 0 to 1.

In an embodiment, a respective element of the first matrix may be equal to 1 if a respective splitting attribute is assigned to a respective node and equal to 0 if a respective splitting attribute is not assigned to a respective node.

In an embodiment, each element of the second matrix may be representative of a position of respective leaf with respect to a respective node of the decision tree, and each element of the second matrix may have a fifth value if a successful test of the splitting attribute of a respective node is required in order to reach the respective leaf, a sixth value if an unsuccessful test of the splitting attribute of the respective node is required in order to reach the respective leaf, and a seventh value it a respective leaf cannot be reached from a respective node.

In an embodiment, the fifth value may be equal to 1, the sixth value may be equal to -1 and the seventh value may be equal to zero.

Each element of the second matrix may indicate whether from a respective node the "true" path or the "false" path has to be taken in order to reach a respective leaf. When the "true" path has to be taken, the value of the element may be 1 (fifth value), when the false path has to be taken, the value of the element may be -1 (sixth value), and if it is not possible to reach the respective leaf from the respective node, the value of the element may be 0 (seventh value).

Another aspect of the present disclosure is related to a computer program product comprising instructions which, when the instructions are executed by a processing unit, cause the processing unit to implement the method as described above.

This program may use any programming language (for example, an object-oriented language or other), and be in the form of interpretable source code, partially compiled code, or fully compiled code.

Another aspect of the present disclosure is related to a client device configured to process a digital content with a decision tree comprising a plurality of nodes and a plurality of leaves, wherein a splitting attribute and a splitting threshold are assigned to each node, the decision tree being defined by a first matrix defining a relation between the nodes and the splitting attributes, a second matrix defining a position of a respective leaf of the decision tree with respect to a respective node of the decision tree, a first vector comprising the splitting threshold of each node, and a second vector describing, for each leaf of the decision tree, a number of successful tests on splitting attributes of respective nodes required to reach a respective leaf.

The client device may comprise:

- an interface configured to obtain a plaintext representative of a digital content to be processed, the plaintext being in the form of a vector;
- a circuit configured to encrypt the plaintext to obtain a ciphertext;
- an interface configured to transmit the ciphertext to the processing device;

- an interface configured to obtain a processed ciphertext from the processing device, the processed ciphertext being function of an encryption of a difference between a third vector and the first vector, wherein an encryption of the third vector is determined based on an encryption of a multiplication of

the plaintext and the first matrix;

- a circuit configured to decrypt the processed ciphertext, to obtain a processed plaintext;
- a circuit configured to set elements of the processed plaintext with a positive sign or being equal to 0 to a first value and elements of the processed plaintext with a negative sign to a second value different from the first value;
- a circuit configured to encrypt the processed plaintext, to obtain a second ciphertext;
- an interface configured to transmit the second ciphertext to the processing device;
- an interface configured to obtain a second processed ciphertext from the processing device, the second processed ciphertext being function of an encryption of a difference between a fourth vector and the second vector, wherein an encryption of the fourth vector is determined based on an encryption of a multiplication of the processed plaintext and the second matrix;
- a circuit configured to decrypt the second processed ciphertext, to obtain a second plaintext;
- a circuit configured to set elements of the second plaintext either to a third value or to a fourth value, as a function of a value of a respective element of the second plaintext;
- a circuit configured to determine an outcome of the decision tree based on the second plaintext, the outcome being representative of a leaf of the decision tree.

Another aspect of the present disclosure is related to a processing device configured to process a digital content with a decision tree comprising a plurality of nodes and a plurality of leaves, wherein a splitting attribute and a splitting threshold are assigned to each node, the decision tree being defined by a first matrix defining a relation between the nodes and the splitting attributes, a second matrix defining a position of a respective leaf of the decision tree with respect to a respective node of the decision tree, a first vector comprising the splitting threshold of each node, and a second vector describing, for each leaf of the decision tree, a number of successful tests on splitting attributes of respective nodes required to reach a respective leaf.

The processing device may comprise:

- an interface configured to receive a ciphertext from the client device, the ciphertext being determined by the client device by encrypting a plaintext, the plaintext being representative of a digital content to be processed, the plaintext being in the form of a vector;
- a circuit configured to determine an encryption of a third vector equal to an encryption of a multiplication of the plaintext and the first matrix;
- a circuit configured to determine a processed ciphertext function of an encryption of a difference between the third vector and the first vector;
- an interface configured to transmit the processed ciphertext to the client device;
- an interface configured to receive a second ciphertext from the client device, the second ciphertext being determined by the client device by decrypting the processed ciphertext to obtain a processed plaintext, by setting elements of the processed plaintext with a positive sign or being equal to 0 to a first value and elements of the processed plaintext with a negative sign to a second value different from the first value, and by encrypting the processed plaintext;
- a circuit configured to determine an encryption of a fourth vector based on an encryption of a multiplication of the processed plaintext and the second matrix;
- a circuit configured to determine a second processed ciphertext function of an encryption of a difference between a fourth vector and the second vector;
- an interface configured to transmit the second processed ciphertext to the client device, in order for the client device to decrypt the second processed ciphertext to obtain a second plaintext, to set elements of the second plaintext either to a third value or to a fourth value, as a function of a value of a respective element of the second plaintext, and to determine an outcome of the decision tree based on the second plaintext, the outcome being representative of a leaf of the decision tree.

Another aspect of the present disclosure is related to a system comprising a client device as described above and a processing device as described above.

The client device and the processing device may be for example a computer.

The client device and the processing device may communicate with each other over any communication channel (private or public), for example via Internet.

The system may be configured to implement the method described above.

The proposed system is innovative in that an encryption protocol is applied to the vector-matrix description of the decision tree.

The proposed system allows efficiently processing a confidential digital content with a decision tree, which is achieved by using a vector-matrix description of the decision tree, wherein all data sent by the client device to the processing device are encrypted by the client device.

Thus, the digital content may be processed and an outcome of the decision tree may be determined by the client device, without the processing device learning any relevant information about the data provided by the client device or the processed data that the client device obtains from the processing device.

The processing device has no relevant information about the plaintext, the processed plaintext, the second processed plaintext, the second plaintext of the lead determined by the client device.

Only few back-and-forth transmissions between the client device and the processing device are required. The method is very efficient and fast in effective runtime, and may easily be implemented even if the client device has limited computational resources.

The system is very efficient and fast in effective runtime. The system may easily implement the method even if the client device has limited computational resources.

**Brief Description of Drawings**

Other features, details and advantages will be shown in the following detailed description and on the figures, on which:

**Fig. 1**

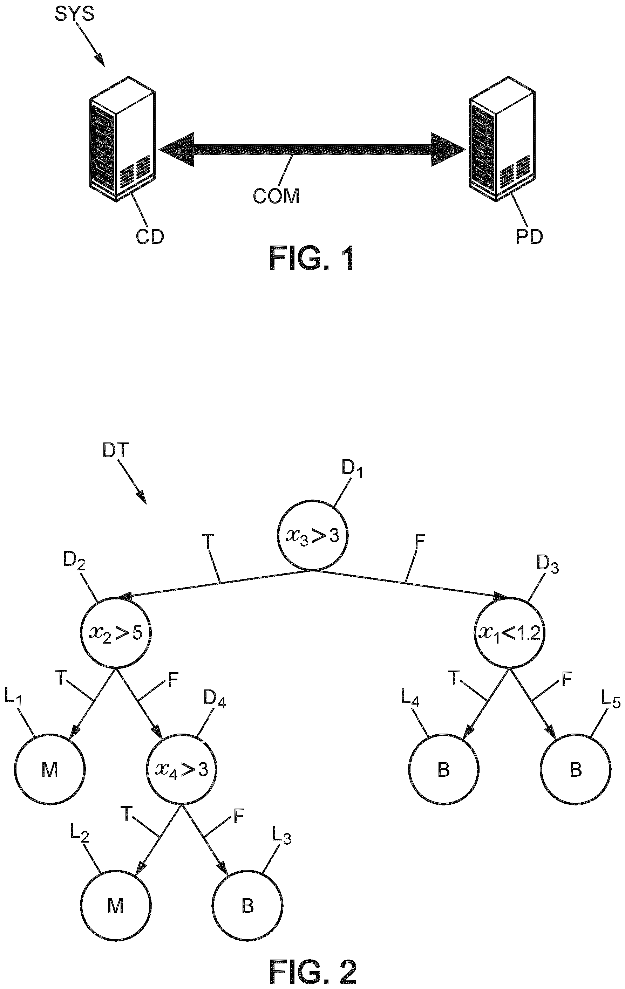

[Fig. 1] shows an arrangement of a system comprising a client device and a processing device according to the present disclosure.

**Fig. 2**
[Fig. 2] shows an embodiment of a decision tree for which a method for processing a digital content with a decision tree according to the present disclosure may be implemented.

**Fig. 3**

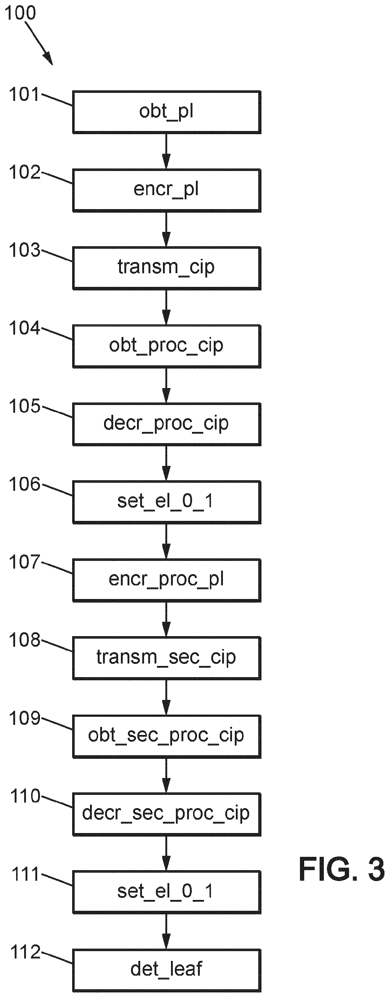

[Fig. 3] shows a flow chart of a method for processing a digital content with a decision tree.

**Fig. 4**

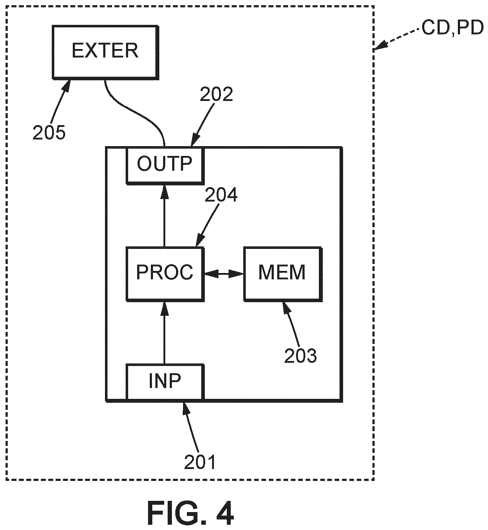

[Fig. 4] shows an embodiment of a client device/a processing device according to the present disclosure.

**Description of Embodiments**

In the following, a method for processing a digital content with a decision tree is presented. The method may be implemented according to several embodiments.

**Figure 1** shows a possible arrangement of a system SYS by which the method may be implemented.

The system SYS comprises a client device CD and a processing device PD that may communicate with each other over a communication channel COM such as the Internet.

For example, the client device CD and the processing device PD may each be a server.

The client device CD may determine a digital content to be processed, for example an image to be analyzed, but not dispose of the required ressources for processing the digital content. Therefore, the client device CD may rely on a processing device PD that disposes of a decision tree for processing at least partially the digital content.

The digital content may be confidential and the client device CD may not want to reveal the digital content to the processing device PD or any other third-party.

In addition, the processing device PD may not want to reveal the main properties of the decision tree.

The method 100 for processing a digital content with a decision tree according to the present application that will be presented in relation to **figure 3** may ensure confidentiality of both the digital content and the main properties of the decision tree by using a vector-matrix description of the decision tree and by implementing several back-and-forth transmission of encrypted content between the client device CD and the processing device PD.

**Figure 2** illustrates the general concept of a decision tree DT. Here, a binary decision tree is considered.

In this example, the decision tree DT comprises four nodes $D_1$, $D_2$, $D_3$, $D_4$ and five leaves $L_1$, $L_2$, $L_3$, $L_4$, $L_5$.

Each node $D_1$, $D_2$, $D_3$, $D_4$ is characterized by a splitting attribute $x_1$, $x_2$, $x_3$, $x_4$ and a splitting threshold.

At each node $D_1$, $D_2$, $D_3$, $D_4$, it may be evaluated whether a respective condition is true of false. If the condition is false, the "false" path (F in figure 2) emerging from the respective node $D_1$, $D_2$, $D_3$, $D_4$ is chosen to proceed further. If the condition is true, the "true" path (T in figure 2) emerging from the respective node $D_1$, $D_2$, $D_3$, $D_4$ is chosen to processed further.

Each leaf $L_1$, $L_2$, $L_3$, $L_4$, $L_5$ may correspond to a possible outcome of the decision tree DT from which no further path emerges.

A plaintext $x = \{x_1,, x_2, ..., x_n\} = \{1.5, 2, 3.5, 5, 4\}$ representative of the digital content to be evaluated by the decision tree DT may be considered.

For example, if the digital content is an image, the elements of the vector x may be representative of specific properties of the image.

In another example, if the digital content is related Internet activities by users, the elements of the vector x may be representative of specific properties of the Internet activities, such as the number of emails sent or the number of files opened.

The decision tree DT is evaluated starting from the top, i.e. by evaluating the first node $D_1$.

The splitting attribute of the first node $D_1$ is $x_3$, and the splitting threshold is 3. At the first node $D_1$, it is evaluated whether $x_3 > 3$.

As the third element $x_3$ of the plaintext x has the value 3.5 and since 3.5 > 3, the condition is true and the path to which the label "true" is assigned is chosen.

Therefore, the next node to be evaluated is the second node $D_2$, the condition of this node being $x_2 > 5$. The second value $x_2$ of the plaintext x being 2, the condition 2 > 5 is false and therefore the path to which the label "false" is assigned is chosen.

Therefore, the next node to be evaluated is the fourth node $D_4$, the condition of this node being $x_4 > 3$. The fourth value $x_4$ of the vector x being 5, the condition 5 > 3 is true and therefore the path to which the label "true" is assigned is chosen.

Therefore, the evaluation of the decision tree DT ends on the second leaf $L_2$ which is considered as the outcome of the decision tree for plaintext x.

In the above-mentioned example regarding Internet activities of users, $x_1$ may be representative of the number of emails sent, $x_2$ may be representative of the number of files opened, $x_3$ may be the mean size of attachments, and $x_4$ may be representative of the number of words in visited websites.

Each leaf $L_1$, $L_2$, $L_3$, $L_4$, $L_5$ may characterize the digital content, which may be either "malicious" (M in figure 2) or "benign" (B in figure 2).

Since in the example considered above the leaf $L_2$ is characterized as malicious, the outcome of the decision tree for the considered digital content is that the digital content is malicious.

Instead of evaluating a decision tree DT step by step as explained above, a decision tree DT may be fully characterized by a vector-matrix description and be evaluated in this vector-matrix description.

Such a matrix-vector-description is provided by Nakandalam, S., Saur, K., Yu, G., Karanasos, K., Curino, C., Weimer, M. and Interlandi, M., "Taming model serving complexity, performance and cost: A compilation to tensor computations approach, propose a description of the properties of a decision tree using matrices and vector", 2020.

Two matrices and three vectors may be defined in order to fully describe the decision tree DT:

- a first matrix defining a relation between the nodes $D_1$, $D_2$, $D_3$, $D_4$ and the splitting attributes $x_1$, $x_2$, $x_3$, $x_4$;
- a second matrix defining a position of a respective leaf $L_1$, $L_2$, $L_3$, $L_4$, $L_5$ of the decision tree DT with respect to a respective node $D_1$, $D_2$, $D_3$, $D_4$ of the decision tree DT;
- a first vector comprising the splitting threshold of each node $D_1$, $D_2$, $D_3$, $D_4$;
- a second vector describing, for each leaf $L_1$, $L_2$, $L_3$, $L_4$, $L_5$ of the decision tree DT, a number of successful tests on splitting attributes of respective nodes $D_1$, $D_2$, $D_3$, $D_4$ required to reach a respective leaf $L_1$, $L_2$, $L_3$, $L_4$, $L_5$ starting from the top node $D_1$; and
- a leaf vector, wherein a respective element of the leaf vector is representative of a respective leaf $L_1$, $L_2$, $L_3$, $L_4$, $L_5$ of the decision tree DT.

More precisely, the decision tree DT may be described as follows:

- define a first matrix A with n lines and d columns:

$$A[i][j] = \begin{cases} 1, \text{if } x_i \text{ is the splitting attribute of node } D_j \\ 0, \text{otherwise} \end{cases}$$

$$1 \leq i \leq n, 1 \leq j \leq d$$

- define a first vector B with d elements. B[j] represents the splitting threshold for the node $D_j$;
- define a second matrix C with d lines and m columns:

$$C[j][k] = \begin{cases} 1, \text{if a "true" path emerging from } D_j \text{ is chosen in order to reach leaf } L_k \\ -1, \text{if a "false" path emerging from } D_j \text{ is chosen in order to reach leaf } L_k \\ 0, \text{if a leaf } L_k \text{ cannot be reached from a node } D_j \end{cases}$$

$$1 \leq j \leq d, \ 1 \leq k \leq m$$

- define a second vector D with m elements. D[k] counts how many "true" paths were chosen in the path from the root, i.e. from node $D_1$, to leaf $L_k$. Since in figure 2 the "true" paths always go to the left and the "false" subtrees go to the right, D[k] counts in this configuration the number of left subtrees;
- define a leaf vector L={$L_1$, $L_2$, $L_3$, $L_4$, $L_5$}.

Regarding the evaluation of a plaintext x with the decision tree DT in the vector-matrix description, it is proceeded as follows:

- compute the vector $x \times A$ and compare it to the first vector B:

$$p[j] = \begin{cases} 1, (x \times A)[j] \geq B[j] \\ 0, \text{otherwise} \end{cases}$$

$$1 \leq j \leq d$$

- compute the vector $p \times C$ and compare it to the second vector D:

$$y[j] = \begin{cases} 1, (p \times C)[k] = D[j] \\ 0, \text{otherwise} \end{cases}$$

$$1 \leq k \leq m$$

- compute the inner product between the vector y and the leaf vector.

The evaluation of a decision tree DT in the vector-matrix formulation is now illustrated for the example of figure 2.

A first matrix $A = \begin{pmatrix} 0 & 0 & 1 & 0 \\ 0 & 1 & 0 & 0 \\ 1 & 0 & 0 & 0 \\ 0 & 0 & 0 & 1 \\ 0 & 0 & 0 & 0 \end{pmatrix}$ may be defined that characterizes the relation between a respective node $D_1$, $D_2$, $D_3$, $D_4$ and a respective splitting attribute.

Each column of the first matrix is representative of a given node $D_1$, $D_2$, $D_3$, $D_4$ and each row is representative of a given splitting attribute of the plaintext x. Since in the above-mentioned example the decision tree DT has four nodes $D_1$, $D_2$, $D_3$, $D_4$ and the plaintext comprises five elements $x_1$, $x_2$, $x_3$, $x_4$ $x_5$, the first matrix A has five rows and four columns.

For example, the element (1,1) of the first matrix A is 0, which means that the splitting attribute $x_1$ is not assigned to node $D_1$. The element (1,3) of the first matrix A is 1, which means that the splitting attribute $x_3$ is assigned to node $D_1$.

The plaintext x = (1.5,2,3.5,5,4) that the client device CD wants to process has elements which are arranged in increasing order of the indices of the splitting attributes, i.e. x = ($x_1$, $x_2$, $x_3$, $x_4$, $x_5$).

When multiplying $m = x \times A$ (referred to as third vector), the resulting vector m comprises the elements of the plaintext x, but now arranged according to the indices of the nodes $D_1$, $D_2$, $D_3$, $D_4$ rather than according to the indices of the aplitting attributes.

In the example mentioned above, calculating $x \times A$ yields m = (3.5,2, 1.5, 5). This means that the first element 3.5 of the vector m is to be evaluated by the first node $D_1$, the second element of the vector m is evaluated by the second node $D_2$, the third element of the vector m is evaluated by the third node $D_3$, and the fourth element of the vector m is evaluated by the fourth node $D_4$.

The values of the vector m are then compared to a first vector B whose elements correspond to the splitting thresholds of the nodes $D_1, D_2, D_3, D_4$, wherein the first element of the first vector B corresponds to the splitting threshold of the first node $D_1$, the second element of first vector B corresponds to the splitting threshold of the second node $D_2$, etc.

Thus, the first vector B can be written as $B = (3,5,1.2,3)$.

A vector p may be defined to store the result of this comparison. Each element j of the vector p may have a value of 1 if m[j] ≥ B[j] and be equal to 0 otherwise.

The resulting vector p is therefore $p = (1,0,1,1)$.

A second matrix C may be defined, wherein each column of the second matrix C is representative of a given leaf and each row is representative of a given node $D_1, D_2, D_3, D_4$. Since in the above-mentioned example the decision tree DT has four nodes $D_1, D_2, D_3, D_4$ and five leaves $L_1, L_2, L_3, L_4, L_5$, the second matrix C has four rows and five columns.

Each element of the second matrix C indicates whether from a respective node $D_1, D_2, D_3, D_4$ the "true" path or the "false" path has to be taken in order to reach a respective leaf $L_1, L_2, L_3, L_4, L_5$. When the "true" path has to be taken, the value of the element is 1 (referred to as fifth value), when the false path has to be taken, the value of the element is -1 (referred to as sixth value), and if it is not possible to reach the respective leaf $L_1, L_2, L_3, L_4, L_5$ from the respective node $D_1, D_2, D_3, D_4$, the value of the element is 0 (referred to as seventh value).

$$C = \begin{pmatrix} 1 & 1 & 1 & -1 & -1 \\ 1 & -1 & -1 & 0 & 0 \\ 0 & 0 & 0 & 1 & -1 \\ 0 & 1 & -1 & 0 & 0 \end{pmatrix}$$

For example, the element $(1,1)$ of the second matrix C is representative of the first node $D_1$ and the first leaf $L_1$. It can be seen that starting from node $D_1$, the path "true" has to be taken in order be able to reach leaf $L_1$. The value of element $(1,1)$ of the second matrix C is therefore equal to 1.

For example, the element $(2,2)$ of the second matrix C is representative of the second node $D_2$ and the second leaf $L_2$. It can be seen that starting from node $D_2$, the path "false" has to be taken in order be able to reach leaf $L_2$. The value of element $(2,2)$ of the second matrix C is therefore equal to -1.

For example, the element $(3,3)$ of the second matrix C is representative of the third node $D_3$ and the third leaf $L_3$. It can be seen that starting from node $D_3$, it is not possible to reach leaf $L_3$, since leaf $L_3$ is not downstream of $D_3$. The value of element $(3,3)$ of the second matrix C is therefore equal to 0.

The vector p determined previously and the second matrix $C$ may now be multiplied: $p \times C$. The result of this multiplication is referred to as q (called fourth vector).

The obtained result is $q=(1,2,0,0,-2)$.

The vector q may then be compared to a second vector D.

Each element of the second vector D is representative of a number of successful tests on splitting attributes of respective nodes $D_1, D_2, D_3, D_4$ required to reach a respective leaf $L_1, L_2, L_3, L_4, L_5$, i.e. the number of times a "true" path has to be taken in order to reach a respective leaf $L_1, L_2, L_3, L_4, L_5$ when starting at the top of the decision tree DT, i.e. at node $D_1$.

For example, in order to reach leaf $L_1$ starting from $D_1$, two "true" paths have to be taken, and therefore the value of the first element of the second matrix D is 2.

For example, in order to reach leaf $L_3$ starting from $D_1$, one "true" path and two "false" paths have to be taken. Since only the number of true paths are considered and the number of false paths are neglected, the value of the third element of the second matrix D is 1.

For example, in order to reach leaf $L_5$ starting from $D_1$, two "false" paths have to be taken. Since no true path has to be taken, the value of the fifth element of the second matrix D is 0.

The second vector D is therefore $D = (2,2,1,1,0)$.

Regarding the comparison of q and D, it is determined whether a respective element of q is equal to a respective element of D. This means that the first element of q is compared to the first element of D, the second element of q is compared to the second element of D, etc.

Only the second element of q is equal to the second element of D, all other respective elements are different from each other.

The vector y stores the result of this comparison. When the respective elements are equal, the respective element of y is set to 1, otherwise the element is set to 0.

Therefore, all elements of the vector y are equal to 0 except for the second element which is equal to 1: $y = (0,1,0,0,0)$.

The vector y may then be multiplied to a leaf vector $L = (L_1, L_2, L_3, L_4, L_5)$. The outcome is $L_2$, and therefore the outcome of the evaluation of the decision tree DT is the second leaf $L_2$, i.e., the digital content is identified to be malicious.

As mentioned earlier, the client device CD does not want to reveal any relevant information regarding the plaintext or the outcome of the decision tree to the processing device PD. Similarly, the processing device PD does not want to reveal any relevant information regarding the decision tree DT to the client device CD.

In order to keep the plaintext x and the outcome of the decision tree $L_2$ and further the properties of the decision tree DT confidential, the method 100 described in relation to **figure 3** is proposed.

In the method 100, a vector-matrix description of the decision tree DT as presented above is used.

In order be be able to perform encryption and decryption, the client device CD has access to an encryption protocol being homomorphic with respect to addition and multiplication.

Any encryption protocol being homomorphic with respect to addition and multiplication can be used.

Homomorphism with respect to addition may be defined as:

$Enc(a_1) \oplus Enc(a_2) = Enc(a_1 + a_2)$, where $\oplus$ is the operation performed over the ciphertext space, i.e. for ciphertexts $Enc(a_1)$ and $Enc(a_2)$, and + is the operation performed over the plaintext space, i.e. for plaintexts $a_1$ and $a_2$.

By way of example, the Paillier encryption protocol is considered.

In the Paillier encryption protocol, the expression $Enc(a_1) \oplus Enc(a_2)$ becomes:

$$Enc(a_1) \bigoplus Enc(a_2) = Enc(a_1) \times Enc(a_2) mod\ n^2 = Enc(a_1 + a_2\ mod\ n)$$

where $\times$ corresponds to a multiplication and + corresponds to an addition.

Simply speaking, in the Paillier encryption protocol, the operation $\oplus$ is a multiplication modulo $n^2$ and the operation + is an addition modulo n.

In another example, the ElGamal encryption protocol may be considered.

In the ElGamal encryption protocol, the expression $Enc(a_1) \oplus Enc(a_2)$ becomes:

$$Enc(a_1) \bigoplus Enc(a_2) = Enc(g^{a_1}) \times Enc(g^{a_2}) = Enc(g^{a_1+a_2})$$

Homomorphism with respect to multiplication may be defined as: $Enc(a_1) \otimes Enc(a_2) = Enc(a_1 \times a_2)$, where $\otimes$ is the operation performed over the ciphertext space, i.e. for ciphertexts $Enc(a_1)$ and $Enc(a_2)$, and $\times$ is the operation performed over the plaintext space, i.e. for plaintexts $a_1$ and $a_2$.

By way of example, the Paillier encryption protocol is considered.

For the Paillier encryption protocol, the expression $Enc(a_1) \otimes Enc(a_2)$ becomes:

$$Enc(a_1) \bigotimes Enc(a_2) = Enc(a_1)^{a_2}\ mod\ \ n^2 = Enc(a_1 \times a_2\ mod\ n).$$

In another example, the ElGamal encryption protocol may be considered.

In the ElGamal encryption protocol, the expression $Enc(a_1) \otimes Enc(a_2)$ becomes:

$$Enc(a_1) \bigotimes Enc(a_2) = Enc(a_1) \times a_2 = Enc(a_1 \times a_2).$$

Hereafter, the method of the present application is illustrated for the specific example of the Paillier encryption. However, other encryption protocols being homomorphic with respect to addition and multiplication may be applied instead.

The following relations may be deduced from the above-mentioned relations for the Paillier encryption.

The encryption of a multiplication of a plaintext vector $a_i$ and a plaintext matrix $b_{ij}$ may be expressed as: $Enc(\sum_i a_i \times b_{ij}) = \Pi_i Enc(a_i)^{b_{ij}}$.

Similarly, the encryption of a multiplication of a plaintext vector $a_i$ and another plaintext vector $b_i$ may be determined as: $Enc(\sum_i a_i \times b_i) = \Pi_i Enc(a_i)^{b_i}$.

When having a plaintext vector $a = (a_1, a_2, ... , a_n)$ and a ciphertext vector $c = Enc(b) = (Enc(b_1), Enc(b_2), ... , Enc(b_n))$, it is possible to determine $Enc(a\ x\ b)$ by the following relation:

$$Enc(a\ x\ b) = Enc(a_1)^{b_1} \times Enc(a_2)^{b_2} \times ... \times Enc(a_n)^{b_n}\ (\textbf{equ. 1})$$

When having a plaintext matrix b with elements $b_{ij}$ and a ciphertext vector $Enc(a) = (Enc(a_1), Enc(a_2), ... , Enc(a_n))$, it is possible to determine $Enc(b\ x\ a)$ by the following relation:

$$Enc\big((b\ x\ a)_j\big) = Enc(b_1)^{a_{1j}} \times Enc(b_2)^{a_{2j}} \times ... \times Enc(b_n)^{a_{nj}}\ (\textbf{equ. 2})$$

When having a plaintext vector $c = (c_1, c_2, ... , c_n)$ and a ciphertext vector $Enc(d) = (Enc(d_1), Enc(d_2), ... , Enc(d_n))$, it is possible to determine $Enc(d - c)$ by applying the following relation:

$$Enc(d - c) = Enc(d_1) \times Enc(c_1)^{-1}, Enc(d_2) \times Enc(c_2)^{-1}, \dots, Enc(d_n) \times Enc(c_n)^{-1} \text{ (\textbf{equ. 3})}$$

In addition, the following relation holds:

$$Enc(r \times (d - c)) = ((Enc(d_1) \times Enc(c_1)^{-1})^{r_1}, (Enc(d_2) \times Enc(c_2)^{-1})^{r_2}, \dots, (Enc(d_n) \times Enc(c_n)^{-1})^{r_n})$$
(**equ. 4**)

where $r_i$ may be positive random numbers corresponding to elements of vector r.

Similar relations hold for other encryption protocols.

In the method 100, the client device CD may obtain (step 101) the plaintext $x = \{x_1, x_2, \dots, x_n\}$ to be processed.

The client device CD may then encrypt (step 102) the plaintext x and transmit (step 103) the resulting ciphertext $Enc(x)$, to the processing device PD. The encryption may be performed by using an encryption protocol being homomorphic with respect to addition and multiplications.

The processing device PD may determine, based on the ciphertext $Enc(x)$ and the first matrix A, the encryption of the product $x \times A$, i.e. $Enc(x \times A) = Enc(m)$, by applying equ. 2. Here, $x \times A$ has been renamed m (referred to as third vector). Thus, the processing device PD can determine $Enc(x \times A)$ without revealing the first matrix A to the client device CD and without knowing the plaintext x.

Then, the comparison between the vector m and the first vector B is performed, which is done by calculating the encryption of the difference $m - B$, i.e. $Enc(m - B)$ (referred to as processed ciphertext) by applying equ. 3.

$Enc(B)$ is needed as an input of equ. 3. Therefore, starting from the first vector B, it is possible to determine $Enc(B)$ by public-key cryptography. Indeed, most protocols being homomorphic with respect to addition and multiplication can be used for public-key cryptography. The processing device PD can easily determine $Enc(B)$ from a public key of the client device without revealing B to the client device CD and without learning relevant details about the encryption applied by the client device CD.

Having determined $Enc(B)$, $Enc(m - B)$ may be determined based on $Enc(m)$ and $Enc(B)$ by applying equ. 3.

In addition, a positive random number $r_i$ may be multiplied to each element of the processed ciphertext, by applying equ. 4: $(Enc(r_i \times (m - B)) = Enc(p)$. Here, $r_i \times (m - B)$ has been renamed p.

Furthermore, a random permutation may be applied to the elements of the processed ciphertext $Enc(r_i \times (m - B))$.

The processed ciphertext $Enc(r_i \times (m - B))$ may then be transmitted by the processing device PD to the client device CD.

The client device CD may obtain (step 104) the processed ciphertext $Enc(r_i \times (m - B))$ from the processing device PD, and decrypt (step 105) the processed ciphertext $Enc(r_i \times (m - B))$, to obtain a processed plaintext $r_i \times (m - B)$.

The client device CD may set (step 106) elements of the processed plaintext $r_i \times (m - B)$ with a positive sign or being equal to 0 to 1 (referred to as first value) and elements of the processed plaintext with a negative sign to 0 (referred to as second value).

Since the client device CD is only interested in the signs of the elements of the processed plaintext $r_i \times (m - B)$, the presence of the positive random numbers $r_i$ does not influence on which elements are set to 0 or 1 by the client device CD.

However, the presence of the random numbers $r_i$ and the fact that a permutation has been applied by the processing device PD to the processed ciphertext $Enc(r_i \times (m - B))$ makes it much more difficult or even impossible for the the client device CD to learn any information about the first matrix A or the first vector B. Thus, confidentiality of the properties of the decision tree is ensured.

The client device CD may then encrypt (step 107) the processed plaintext, to obtain a second ciphertext, and transmit (step 108) the second ciphertext to the processing device PD.

The processing device PD may reverse the permutation by applying to the second ciphertext a permutation inverse to the permutation previously applied to the processed ciphertext.

The processing device PD may then determine, based on the second ciphertext $Enc(p)$ and the second matrix C, the encryption of the product $p \times C$, i.e. $Enc(p \times C) = Enc(q)$, by applying equ. 2. Here, $p \times C$ has been renamed q (called fourth vector).

Thus, the processing device PD is able to determine $Enc(p \times C)$ without revealing the second matrix C to the client device CD and without gaining knowledge about the processed plaintext p.

Then, the encryption of the difference $q - D$ is determined, i.e. $Enc(q - D)$, by applying equ. 3. $Enc(q - D)$ is referred to as second processed ciphertext.

Starting from the second vector D, it is possible to determine $Enc(D)$ by public-key cryptography, as explained above.

The processing device PD may further process the second process ciphertext $Enc(q - D)$ based on equ. 4 in order to obtain $Enc(r_i \times (q - D))$, where $r_i$ may be random positive numbers. Each element of $q - D$, may be multiplied by an individual random positive number.

In addition, the processing device PD may apply a random permutation to the second processed ciphertext, and then transmit the second processed ciphertext to the client device CD.

The client device CD may obtain (step 109) the second processed ciphertext from the processing device PD and decrypt (step 110) the second processed ciphertext, to obtain a second plaintext.

The client device CD may then set (step 111) elements of the second plaintext to 1 (referred to as third value) if a respective element of the second plaintext is equal to a respective element of the second vector D (i.e. if the difference between both elements is 0) and equal to 0 (referred to as fourth value) otherwise.

Since the client device CD is only interested in the fact if the difference between respective elements is equal to 0 or not, the presence of the positive random numbers $r_i$ does not influence on which elements are set to 0 or 1 by the client device CD.

However, the presence of $r_i$ and the fact that the permutation has been carried out by the processing device PD on the second processed ciphertext makes sure that the client device CD cannot learn any information about the second matrix B or the second vector D.

The client device CD may then encrypt the second plaintext and transmit the encrypted second plaintext to the processing device PD.

The processing device PD may apply to the encrypted second plaintext a permutation inverse to the permutation applied to the second processed ciphertext to obtain a processed encrypted second plaintext. Like this, the original order of the elements is recovered.

Then, the processing device PD may multiply the processed encrypted second plaintext and the leaf vector by applying equ. 1 to obtain en encrypted outcome of the decision tree DT.

The processing device PD may transmit the encrypted outcome of the decision tree DT to the client device CD.

The client device CD may receive the encrypted outcome of the decision tree DT and decrypt it to determine (step 112) the outcome of the decision tree DT.

The implementation of the method 100 of **figure 3** is now illustrated for the example of the decision tree DT of **figure 2.**

The client device CD may obtain (step 101) a plaintext $x = (1.5, 2, 3.5, 5, 4)$ and encrypt (step 102) the plaintext to obtain a ciphertext:

$$Enc(x) = Enc(1.5, 2, 3.5, 5, 4) = (Enc(1.5), Enc(2), Enc(3.5), Enc(5), Enc(4)).$$

The client device CD may then transmit (step 103) the ciphertext to the processing device PD.

The processing device PD may determine, based on the ciphertext $Enc(x)$ and the first matrix A, the encryption of the product $x \times A$, i.e. $Enc(x \times A) = Enc(m)$ (where ms is referred to as third vector), by applying equ. 2:

$$Enc(m_1) = Enc(1.5)^0 + Enc(2)^0 + Enc(3.5)^1 + Enc(5)^0 + Enc(4)^0 = Enc(3.5)$$

$$Enc(m_2) = Enc(1.5)^0 + Enc(2)^1 + Enc(3.5)^0 + Enc(5)^0 + Enc(4)^0 = Enc(2)$$

$$Enc(m_3) = Enc(1.5)^1 + Enc(2)^0 + Enc(3.5)^0 + Enc(5)^0 + Enc(4)^0 = Enc(1.5)$$

$$Enc(m_4) = Enc(1.5)^0 + Enc(2)^0 + Enc(3.5)^0 + Enc(5)^1 + Enc(4)^0 = Enc(5)$$

The processing device PD may then compute $Enc(m - B) = Enc(p)$, by applying equ. 3.

$$Enc(p_1) = Enc(m_1 - B_1) = Enc(3.5 - 3) = Enc(0.5)$$

$$Enc(p_2) = Enc(m_2 - B_2) = Enc(2 - 5) = Enc(-3)$$

$$Enc(p_3) = Enc(m_3 - B_3) = Enc(1.5 - 1.2) = Enc(0.3)$$

$$Enc(p_4) = Enc(m_4 - B_4) = Enc(5 - 3) = Enc(2)$$

Random numbers $r_1, r_2, r_3, r_4$ may then be applied to $Enc(p)$ by the processing device PD, by applying equ. 4, to obtain the processed ciphertext:

$$((Enc(3.5) \times Enc(3)^{-1})^{r_1}, (Enc(2) \times Enc(5)^{-1})^{r_2}, (Enc(1.5) \times Enc(1.2)^{-1})^{r_3}, (Enc(5) \times Enc(3)^{-1})^{r_4})$$

The processing device PD may then apply a random permutation, to obtain:

$$((Enc(2) \times Enc(5)^{-1})^{r_2}, (Enc(3.5) \times Enc(3)^{-1})^{r_1}, (Enc(5) \times Enc(3)^{-1})^{r_4}, (Enc(1.5) \times Enc(1.2)^{-1})^{r_3})$$

The processing device PD may transmit the processed ciphertext to the client device CD.
The client device CD may obtain (step 104) the processed ciphertext from the processing device PD and decrypt (step 105) the processed ciphertext, to obtain a processed plaintext:

$$p = \big((2-5) \times r_2, (3.5-3) \times r_1, (5-3) \times r_4, (1.5-1.2) \times r_3\big) = (-3 \times r_2, 0.5 \times r_1, 2 \times r_4, 0.3 \times r_3)$$

The client device CD may set (step 106) elements of the processed plaintext with a positive sign or being equal to 0 to 1 (first value), and elements of the processed plaintext with a negative sign to 0 (second value). The processed plaintext is $p = (0,1,1,1)$.
The client device CD may then encrypt (step 107) the processed plaintext p, to obtain a second ciphertext $Enc(p)$ = ($Enc(0)$, $Enc(1)$, $Enc(1)$, $Enc(1)$).
The client device CD may transmit (step 108) the second ciphertext to the processing device PD.
The processing device PD may apply to the second ciphertext a permutation inverse to the permutation applied to the processed ciphertext. Like this, the original order of the elements is recovered: ($Enc(1)$, $Enc(0)$, $Enc(1)$, $Enc(1)$).
The processing device PD may determine, based on the second ciphertext $Enc(p)$ = ($Enc(1)$, $Enc(0)$, $Enc(1)$, $Enc(1)$) and the second matrix C, the encryption $Enc(p \times C) = Enc(q)$, by applying equ. 2 (q is referred to as fourth vector).
The processing device PD obtains:

$$Enc(q_1) = Enc(1)^1 + Enc(0)^1 + Enc(1)^0 + Enc(1)^0 = Enc(1)$$

$$Enc(q_2) = Enc(1)^1 + Enc(0)^{-1} + Enc(1)^0 + Enc(1)^1 = Enc(2)$$

$$Enc(q_3) = Enc(1)^1 + Enc(0)^{-1} + Enc(1)^0 + Enc(1)^{-1} = Enc(0)$$

$$Enc(q_4) = Enc(1)^{-1} + Enc(0)^0 + Enc(1)^1 + Enc(1)^0 = Enc(0)$$

$$Enc(q_5) = Enc(1)^{-1} + Enc(0)^0 + Enc(1)^{-1} + Enc(1)^0 = Enc(-2)$$

The processing device PD may then compute a second processed ciphertext $Enc(q - D)$, by applying equ. 3.

$$Enc(q_1 - D_1) = Enc(1-2) = Enc(-1)$$

$$Enc(q_2 - D_2) = Enc(2-2) = Enc(0)$$

$$Enc(q_3 - D_3) = Enc(0-1) = Enc(-1)$$

$$Enc(q_4 - D_4) = Enc(0-1) = Enc(-1)$$

$$Enc(q_5 - D_5) = Enc(-2-0) = Enc(-2)$$

Random numbers $r_1$, $r_2$, $r_3$, $r_4$, $r_5$ may then be applied by the processing device PD to the second processed ciphertext, by applying equ. 4, to obtain:

$$((Enc(1) \times Enc(2)^{-1})^{r_1}, (Enc(2) \times Enc(2)^{-1})^{r_2}, (Enc(0) \times Enc(1)^{-1})^{r_3}, (Enc(0) \times Enc(1)^{-1})^{r_4}, (Enc(-2) \times Enc(0)^{-1})^{r_5})$$

In addition, the processing device PD may apply a random permutation to the second processed ciphertext, to

obtain:

$((Enc(-2) \times Enc(0)^{-1})^{r_5}), (Enc(0) \times Enc(1)^{-1})^{r_4}, (Enc(0) \times Enc(1)^{-1})^{r_3}, (Enc(2) \times Enc(2)^{-1})^{r_2}, (Enc(1) \times Enc(2)^{-1})^{r_1}.$

The processing device PD may transmit the second processed ciphertext to the client device CD.

The client device CD may obtain (step 109) the second processed ciphertext from the processing device PD, and decrypt (step 110) the second processed ciphertext, to obtain a second plaintext:

$$((-2-0) \times r_5, (0-1) \times r_4, (0-1) \times r_3, (2-2) \times r_2, (1-2) \times r_5)$$

The client device CD may set elements with a value different from 0 to 0 and elements with a value equal to 0 to 1.

The client device CD obtains:

$$(Enc(0), Enc(0), Enc(0), Enc(1), Enc(0))$$

The client device CD may then encrypt the second plaintext and transmit the encrypted second plaintext to the processing device PD.

The processing device PD may apply to the encrypted second plaintext a permutation inverse to the permutation applied to the second processed ciphertext to obtain a processed encrypted second plaintext. Like this, the original order of the elements is recovered.

$$(Enc(0), Enc(1), Enc(0), Enc(0), Enc(0))$$

The processing device PD may further multiply the encrypted second plaintext and a leaf vector by applying equ. 1 to obtain the encrypted outcome of the decision tree DT.

The leaf vector $L = (L_1, L_2, L_3, L_4, L_5)$ may here be written as $L = (1,1,0,0,0)$, where "1" stands for malicious and "0" stands for "begnin".

When multiplying the encrypted second plaintext and the leaf vector, the encrypted outcome is $Enc(1)$.

The processing device PD may transmit the encrypted outcome $Enc(1)$ of the decision tree DT to the client device CD.

The client device CD may receive the encrypted outcome and decrypt it to determine (step 112) a leaf the outcome of the decision tree DT: 1 (which means "malicious").

The proposed method 100 allows efficiently processing a plaintext to determine an outcome of the decision tree, without revealing the plaintext or the outcome of the decision tree to the processing device and without revealing the properties of the decision tree to the client device.

The only information that is publicly known is the structure of the decision tree, i.e. the number of nodes of the decision tree, and the number of elements of the input vector and the number of bits of each element of the input vector.

The client device CD cannot gather any relevant information about the decision tree DT, and the processing device PD cannot gather any relevant information about the plaintext or the outcome of the decision tree.

**Figure 4** shows a possible embodiment of a client device CD and a processing device PD configured to implement at least part of the method 100 described in relation to **figure 3.**

Each of the client device CD and the processing device PD may comprise at least one input interface 201 for receiving messages or instructions, and at least one output interface 202 for communicating with external devices 205.

In particular, the client device CD may be configured to transmit encrypted data to the processing device PD via its output interface 202, and to receive encrypted data from the processing device PD via its input interface 201.

The processing device PD may receive the encrypted data from the client device CD via its input interface 201 and transmit encrypted data to the client device CD via its output interface 202.

Each of the client device CD and the processing device PD may further comprise a memory 203 for storing instructions enabling the implementation of at least part of the method 100, the data received, and temporary data for carrying out the various operations of the method 100 as described above.

Each client device CD and processing device PD may further comprise one or more circuits 204, for example:

- a processor able to interpret instructions in the form of a computer program, or
- a circuit board in which the operations of the disclosed method 100 are described in the silicon, or
- a programmable electronic chip such an FPGA chip ("Field-Programmable Gate Array"), an SOC ("System On Chip"), or an ASIC ("Application Specific Integrated Circuit").

SOCs or systems on a chip are embedded systems that integrate all the components of an electronic system into a single chip. An ASIC is a specialized electronic circuit that groups customized functionalities for a given application. ASICs are generally configured during their manufacture and can be simulated by an operator of the client device CD and/or processing device PD. FPGA-type programmable logic circuits are electronic circuits that are reconfigurable by the operator of the client device CD and/or processing device PD.

Each step of the method 100 may be carried out by the same circuit or by an individual circuit.

The client device CD/ processing device PD may be a computer, an electronic component, or another device comprising a processor operably coupled to a memory, as well as, depending on the chosen embodiment, a data storage unit, and other associated hardware elements such as a network interface and a media reader for reading removable storage media and for writing to such media.

Depending on the embodiment, the memory 203, the data storage unit, or the removable storage medium contain instructions which, when executed by circuit 204, cause this circuit to carry out or control the at least one input interface 201, the at least one output interface 202, the storage of data in memory 203, and/or the processing of data and/ or the implementation of at least part of the method 100 according to figure 3. The circuit 204 may be a component which implements the control of the client device CD and/or processing device PD.

In addition, the client device CD and/or processing device PD may be implemented in software form, in which case it takes the form of a program executable by a processor, or in hardware form, such as an application specific integrated circuit ASIC, a system on chip SOC, or in the form of a combination of hardware and software elements, for example a software program intended to be loaded and executed on an electronic component described above such as an FPGA, processor.

The client device CD and/or processing device PD may also use hybrid architectures, for example architectures based on a CPU+FPGA, a GPU ("Graphics Processing Unit"), or an MPPA ("Multi-Purpose Processor Array").

This disclosure is not limited to the example devices, systems, method, and computer program products described above solely by way of example, but encompasses all variants conceivable to the person skilled in the art within the framework of the protection sought.

**Claims**

1. A method (100) for processing a digital content with a decision tree (DT) comprising a plurality of nodes ($D_1, D_2, D_3, D_4$) and a plurality of leaves ($L_1, L_2, L_3, L_4, L_5$), wherein a splitting attribute and a splitting threshold are assigned to each node ($D_1, D_2, D_3, D_4$), the decision tree (DT) being defined by a first matrix defining a relation between the nodes ($D_1, D_2, D_3, D_4$) and the splitting attributes, a second matrix defining a position of a respective leaf ($L_1, L_2, L_3, L_4, L_5$) of the decision tree (DT) with respect to a respective node ($D_1, D_2, D_3, D_4$) of the decision tree (DT), a first vector comprising the splitting threshold of each node ($D_1, D_2, D_3, D_4$), and a second vector describing, for each leaf ($L_1, L_2, L_3, L_4, L_5$) of the decision tree (DT), a number of successful tests on splitting attributes of respective nodes ($D_1, D_2, D_3, D_4$) required to reach a respective leaf ($L_1, L_2, L_3, L_4, L_5$), the method (100) comprising:

   - obtaining (101), by a client device (CD), a plaintext representative of a digital content to be processed, the plaintext being in the form of a vector;
   - encrypting (102), by the client device (CD), the plaintext to obtain a ciphertext;
   - transmitting (103), by the client device (CD), the ciphertext to a processing device (PD);
   - obtaining (104), by the client device (CD), a processed ciphertext from the processing device (PD), the processed ciphertext being function of an encryption of a difference between a third vector and the first vector, wherein an encryption of the third vector is determined based on an encryption of a multiplication of the plaintext and the first matrix;
   - decrypting (105), by the client device (CD), the processed ciphertext, to obtain a processed plaintext;
   - setting (106), by the client device (CD), elements of the processed plaintext with a positive sign or being equal to 0 to a first value and elements of the processed plaintext with a negative sign to a second value different from the first value;
   - encrypting (107), by the client device (CD), the processed plaintext, to obtain a second ciphertext;
   - transmitting (108), by the client device (CD), the second ciphertext to the processing device (PD);
   - obtaining (109), by the client device (CD), a second processed ciphertext from the processing device (PD), the second processed ciphertext being function of an encryption of a difference between a fourth vector and the second vector, wherein an encryption of the fourth vector is determined based on an encryption of a multiplication of the processed plaintext and the second matrix;
   - decrypting (110), by the client device (CD), the second processed ciphertext, to obtain a second plaintext;
   - setting (111), by the client device (CD), elements of the second plaintext either to a third value or to a fourth value, as a function of a value of a respective element of the second plaintext;
- determining (112), by the client device (CD), an outcome of the decision tree (DT) based on the second plaintext, the outcome being representative of a leaf ($L_1$, $L_2$, $L_3$, $L_4$, $L_5$) of the decision tree (DT).

2. The method of claim 1, wherein a permutation is applied to the processed ciphertext by the processing device (PD) and a permutation inverse to the permutation applied to the processed ciphertext is applied to the second ciphertext by the processing device (PD).

3. The method of any one of the previous claims, wherein a permutation is applied to the second processed ciphertext by the processing device (PD), and wherein the method (100) comprises:

- having set elements of the second plaintext either to a third value or to a fourth value: encrypting, by the client device (CD), the second plaintext;
- transmitting, by the client device (CD), the encrypted second plaintext to the processing device (PD);
- obtaining, by the client device (CD), an encrypted outcome of the decision tree (DT) from the processing device (PD), the encrypted outcome of the decision tree (DT) being representative of a leaf ($L_1$, $L_2$, $L_3$, $L_4$, $L_5$) of the decision tree (DT) determined by the processing device (PD) by applying a permutation inverse to the permutation applied to the second processed ciphertext to the encrypted second plaintext, and by determining an encryption of a multiplication between the encrypted second plaintext and a leaf vector, wherein a respective element of the leaf vector is representative of a respective leaf ($L_1$, $L_2$, $L_3$, $L_4$, $L_5$) of the decision tree (DT);
- decrypting, by the client device (CD), the encrypted outcome of the decision tree (DT) to obtain the outcome of the decision tree (DT).

4. The method of any one of the previous claims, wherein encryption and decryption is based on a protocol being homomorphic with respect to addition and multiplication.

5. The method of claim 4, wherein the protocol is a Paillier encryption protocol.

6. The method of claim 5, wherein the encryption of a multiplication of the plaintext and the first matrix, and/or the encryption of a multiplication of the processed plaintext and the second matrix is defined as:

$$Enc\left(\sum_i a_i b_{ij}\right) = \prod_i Enc(a_i)^{b_{ij}}$$

wherein $a_i$ are elements of the plaintext/the processed plaintext and $b_{ij}$ are elements of the first matrix/the second matrix.

7. The method of any one of claims 5 and 6, wherein the encryption of a difference between the third vector and the first vector and/or an encryption of a difference between the fourth vector and the second vector is defined as:

$$Enc(r_i \times (c_i - d_i)) = (Enc(c_i) \times Enc(d_i)^{-1})^{r_i}$$

wherein $c_i$ are elements of the third vector/the fourth vector, $d_i$ are elements of the first vector/the second vector, and $r_i$ are numbers having a same sign.

8. The method of claim 7, wherein $r_i$ are positive numbers.

9. The method of any one of claims 7 and 8, wherein $r_i$ are random numbers.

10. The method of claim 7, wherein the encryption of a difference between the third vector and the first vector and/or an encryption of a difference between the fourth vector and the second vector is defined as:

$$Enc(c_i - d_i) = Enc(c_i) \times Enc(d_i)^{-1}$$

11. The method of any one of the previous claims, wherein each element of the second matrix is representative of a position of respective leaf ($L_1$, $L_2$, $L_3$, $L_4$, $L_5$) with respect to a respective node ($D_1$, $D_2$, $D_3$, $D_4$) of the decision tree (DT), and wherein each element of the second matrix has a fifth value if a successful test of the splitting attribute of a respective node ($D_1$, $D_2$, $D_3$, $D_4$) is required in order to reach the respective leaf ($L_1$, $L_2$, $L_3$, $L_4$, $L_5$), a sixth value if an unsuccessful test of the splitting attribute of the respective node ($D_1$, $D_2$, $D_3$, $D_4$) is required in order to reach the respective leaf ($L_1$, $L_2$, $L_3$, $L_4$, $L_5$), and a seventh value it a respective leaf ($L_1$, $L_2$, $L_3$, $L_4$, $L_5$) cannot be reached from a respective node.

12. A computer program product comprising instructions which, when the instructions are executed by a processing unit, cause the processing unit to implement the method (100) of any one of the previous claims.

13. A client device (CD) configured to process a digital content with a decision tree (DT) comprising a plurality of nodes ($D_1$, $D_2$, $D_3$, $D_4$) and a plurality of leaves ($L_1$, $L_2$, $L_3$, $L_4$, $L_5$), wherein a splitting attribute and a splitting threshold are assigned to each node ($D_1$, $D_2$, $D_3$, $D_4$), the decision tree (DT) being defined by a first matrix defining a relation between the nodes ($D_1$, $D_2$, $D_3$, $D_4$) and the splitting attributes, a second matrix defining a position of a respective leaf ($L_1$, $L_2$, $L_3$, $L_4$, $L_5$) of the decision tree (DT) with respect to a respective node ($D_1$, $D_2$, $D_3$, $D_4$) of the decision tree (DT), a first vector comprising the splitting threshold of each node ($D_1$, $D_2$, $D_3$, $D_4$), and a second vector describing, for each leaf ($L_1$, $L_2$, $L_3$, $L_4$, $L_5$) of the decision tree (DT), a number of successful tests on splitting attributes of respective nodes ($D_1$, $D_2$, $D_3$, $D_4$) required to reach a respective leaf ($L_1$, $L_2$, $L_3$, $L_4$, $L_5$), the client device (CD) comprising:

- an interface configured to obtain a plaintext representative of a digital content to be processed, the plaintext being in the form of a vector;
- a circuit configured to encrypt the plaintext to obtain a ciphertext;
- an interface configured to transmit the ciphertext to the processing device (PD);
- an interface configured to obtain a processed ciphertext from the processing device (PD), the processed ciphertext being function of an encryption of a difference between a third vector and the first vector, wherein an encryption of the third vector is determined based on an encryption of a multiplication of the plaintext and the first matrix;
- a circuit configured to decrypt the processed ciphertext, to obtain a processed plaintext;
- a circuit configured to set elements of the processed plaintext with a positive sign or being equal to 0 to a first value and elements of the processed plaintext with a negative sign to a second value different from the first value;
- a circuit configured to encrypt the processed plaintext, to obtain a second ciphertext;
- an interface configured to transmit the second ciphertext to the processing device (PD);
- an interface configured to obtain a second processed ciphertext from the processing device (PD), the second processed ciphertext being function of an encryption of a difference between a fourth vector and the second vector, wherein an encryption of the fourth vector is determined based on an encryption of a multiplication of the processed plaintext and the second matrix;
- a circuit configured to decrypt the second processed ciphertext, to obtain a second plaintext;
- a circuit configured to set elements of the second plaintext either to a third value or to a fourth value, as a function of a value of a respective element of the second plaintext;
- a circuit configured to determine an outcome of the decision tree (DT) based on the second plaintext, the outcome being representative of a leaf ($L_1$, $L_2$, $L_3$, $L_4$, $L_5$) of the decision tree (DT).

14. A processing device (PD) configured to process a digital content with a decision tree (DT) comprising a plurality of nodes ($D_1$, $D_2$, $D_3$, $D_4$) and a plurality of leaves ($L_1$, $L_2$, $L_3$, $L_4$, $L_5$), wherein a splitting attribute and a splitting threshold are assigned to each node ($D_1$, $D_2$, $D_3$, $D_4$), the decision tree (DT) being defined by a first matrix defining a relation between the nodes ($D_1$, $D_2$, $D_3$, $D_4$) and the splitting attributes, a second matrix defining a position of a respective leaf ($L_1$, $L_2$, $L_3$, $L_4$, $L_5$) of the decision tree (DT) with respect to a respective node ($D_1$, $D_2$, $D_3$, $D_4$) of the decision tree (DT), a first vector comprising the splitting threshold of each node ($D_1$, $D_2$, $D_3$, $D_4$), and a second vector describing, for each leaf ($L_1$, $L_2$, $L_3$, $L_4$, $L_5$) of the decision tree (DT), a number of successful tests on splitting attributes of respective nodes ($D_1$, $D_2$, $D_3$, $D_4$) required to reach a respective leaf ($L_1$, $L_2$, $L_3$, $L_4$, $L_5$), the processing device (PD) comprising:

- an interface configured to receive a ciphertext from the client device (CD), the ciphertext being determined by the client device (CD) by encrypting a plaintext, the plaintext being representative of a digital content to be processed, the plaintext being in the form of a vector;
- a circuit configured to determine an encryption of a third vector equal to an encryption of a multiplication of the plaintext and the first matrix;
- a circuit configured to determine a processed ciphertext function of an encryption of a difference between the third vector and the first vector;
- an interface configured to transmit the processed ciphertext to the client device (CD);

- an interface configured to receive a second ciphertext from the client device (CD), the second ciphertext being determined by the client device (CD) by decrypting the processed ciphertext to obtain a processed plaintext, by setting elements of the processed plaintext with a positive sign or being equal to 0 to a first value and elements of the processed plaintext with a negative sign to a second value different from the first value, and by encrypting the processed plaintext;
- a circuit configured to determine an encryption of a fourth vector based on an encryption of a multiplication of the processed plaintext and the second matrix;
- a circuit configured to determine a second processed ciphertext function of an encryption of a difference between a fourth vector and the second vector;
- an interface configured to transmit the second processed ciphertext to the client device (CD), in order for the client device (CD) to decrypt the second processed ciphertext to obtain a second plaintext, to set elements of the second plaintext either to a third value or to a fourth value, as a function of a value of a respective element of the second plaintext, and to determine an outcome of the decision tree (DT) based on the second plaintext, the outcome being representative of a leaf ($L_1$, $L_2$, $L_3$, $L_4$, $L_5$) of the decision tree (DT).

15. A system comprising a client device (CD) of claim 13 and a processing device (PD) of claim 14.

**FIG. 1**

**FIG. 2**

100

101 — obt_pl

102 — encr_pl

103 — transm_cip

104 — obt_proc_cip

105 — decr_proc_cip

106 — set_el_0_1

107 — encr_proc_pl

108 — transm_sec_cip

109 — obt_sec_proc_cip

110 — decr_sec_proc_cip

111 — set_el_0_1

112 — det_leaf

**FIG. 3**

**FIG. 4**

Europäisches Patentamt
European Patent Office
Office européen des brevets

# EUROPEAN SEARCH REPORT

**Application Number**

EP 24 30 6950

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Nakandala Supun ET AL: "Taming Model Serving Complexity, Performance and Cost: A Compilation to Tensor Computations Approach", , 12 March 2024 (2024-03-12), XP093268217, Retrieved from the Internet: URL:https://scnakandala.github.io/papers/TR_2020_Hummingbird.pdf * Section 3, 4 * ----- | 1-15 | INV. H04L9/00 |
| A | US 2021/376995 A1 (RATHA NALINI K [US] ET AL) 2 December 2021 (2021-12-02) * paragraph [0072] - paragraph [0089]; figures 4-7 * ----- | 1-15 | |
| A | AZOGAGH SOFIANE AZOGAGH SOFIANE@COURRIER UQAM CA ET AL: "PROBONITE PRivate One-Branch-Only Non-Interactive decision Tree Evaluation", PROCEEDINGS OF THE 6TH ACM SIGSPATIAL INTERNATIONAL WORKSHOP ON LOCATION-BASED RECOMMENDATIONS, GEOSOCIAL NETWORKS AND GEOADVERTISING, ACMPUB27, NEW YORK, NY, USA, 7 November 2022 (2022-11-07), pages 23-33, XP058914590, DOI: 10.1145/3560827.3563377 ISBN: 978-1-4503-9914-2 * Section 1-4 * ----- | 1-15 | TECHNICAL FIELDS SEARCHED (IPC) H04L G06N |

The present search report has been drawn up for all claims

| Place of search | Date of completion of the search | Examiner |
|---|---|---|
| Munich | 15 April 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6950

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | Publication date | Patent family member(s) | Publication date |
|---|---|---|---|
| US 2021376995 A1 | 02-12-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NAKANDALAM, S.** ; **SAUR, K.** ; **YU, G.** ; **KARANASOS, K.** ; **CURINO, C.** ; **WEIMER, M.** ; **INTERLANDI, M.** *Taming model serving complexity, performance and cost: A compilation to tensor computations approach, propose a description of the properties of a decision tree using matrices and vector*, 2020